# EUROPÄISCHE PATENTSCHRIFT

(11) **EP 1 125 778 B1**
(45) Veröffentlichungstag und Bekanntmachung des Hinweises auf die Patenterteilung: **28.03.2007**
(21) Anmeldenummer: 01103299.2
(22) Anmeldetag: 13.02.2001
(51) Int. Cl.: B60J 7/047, B60J 7/043, B60J 7/04

(54) **Öffnungsfähiges Fahrzeugdach**
Open roof construction for vehicle
Toit ouvrant pour véhicule

(30) Priorität: 18.02.2000 DE 10007472
(43) Veröffentlichungstag der Anmeldung: 22.08.2001
(73) Patentinhaber: Webasto Vehicle Systems International GmbH, 82131 Stockdorf (DE)
(72) Erfinder: Karami, Malamiri Jadolah, 85521 Ottobrunn (DE); Pfalzgraf, Manfred, 82211 Herrsching (DE); Schätzler, Walter, 82319 Starnberg (DE); Birkner, Joachim, 82178 Puchheim (DE)
(74) Vertreter: Wiese, Gerhard

(56) Entgegenhaltungen:
- DE-A- 3 828 062
- DE-C- 3 924 036
- DE-C- 4 142 265
- US-A- 4 210 360

## Beschreibung

Die Erfindung betrifft ein Fahrzeug mit einem öffnungsfähigen Fahrzeugdach mit wenigstens zwei hintereinander angeordneten, separat öffnungsfähigen Dachsystemen gemäß dem Oberbegriff des Patentanspruchs 1.

Aus der EP 0 531 881 A2 ist ein Fahrzeugdach mit zwei Deckeln bekannt, die hintereinander in einem festen Fahrzeugdach angeordnet sind. Die beiden Deckel sind zwar durch einen einzigen Antrieb zu betätigen, die Betätigung kann jedoch separat für jeden Deckel erfolgen.

Es sind ferner Fahrzeuge bekannt, bei denen eine Heckscheibe in einer Heckklappe separat absenkbar ist, um einen Zugang zu einem hinteren Laderaum des Fahrzeugs insbesondere für das Verstauen sperriger Gegenstände zu erleichtern.

Aus der DE 43 29 583 C1 ist weiterhin ein Lamellendach bekannt, bei dem die Lamellen in einer Variante auch von hinten nach vorne zu öffnen sind.

Der vorliegenden Erfindung liegt die Aufgabe zugrunde, ein Fahrzeug mit einem öffnungsfähigen Fahrzeugdach gemäß dem Oberbegriff des Patentanspruchs 1 derart weiterzuentwickeln, dass die großzügigen Öffnungsmöglichkeiten eines Fahrzeugdachs mit mehreren hintereinander angeordneten Dachsystemen um die Funktion einer erleichterten Beladung eines Laderaums ergänzt werden.

Diese Aufgabe wird durch die Merkmale des Patentanspruchs 1 gelöst. Vorteilhafte Ausgestaltungen der Erfindung sind den Unteransprüchen zu entnehmen.

Erfindungsgemäß ist vorgesehen, dass ein öffnungsfähiges Fahrzeugdach im hinteren Bereich ein aus mehreren lamellenartigen Deckelteilen bestehendes Lamellendach aufweist, das von hinten nach vorne zu öffnen ist und damit eine große Beladeöffnung im Fahrzeugdach freigibt. Vor diesem Lamellendach ist ein vorderes Dachsystem mit wenigstens einem mit seiner Hinterkante über das feste Fahrzeugdach ausstellbaren Deckel vorgesehen. Durch diese Kombination zweier an sich bekannter Dachsysteme wird die Möglichkeit geschaffen, das nach vorne zusammengeschobene Paket von Lamellen durch den mit seiner Hinterkante ausgestellten Deckel des vorderen Dachsystems vor angreifenden Windkräften im Fahrbetrieb zu schützen. Das vordere und das hintere Dachsystem sind über getrennte elektrische Antriebe antreibbar, die von einem gemeinsamen Steuergerät derart ansteuerbar sind, dass der Deckel des vorderen Dachsystems nur dann ausstellbar und in Längsrichtung begrenzt verschiebbar ist, wenn das hintere Dachsystem geschlossen ist oder einen bestimmten Teilöffnungsgrad erreicht hat. Das Steuergerät übernimmt somit die Aufgabe, Kollisionen der Dachsysteme auszuschließen.

Für eine Vereinfachung der Beladung ist es vorteilhaft, wenn das hintere Deckelteil unmittelbar mit seiner Hinterkante an eine Heckklappe, Hecktür oder Heckscheibe des Fahrzeugs angrenzt. So läßt sich beispielsweise durch Absenken der Heckscheibe in die Hecktür oder Heckklappe bei geöffnetem Lamellendach eine durchgehende Öffnung erreichen, die den hinteren Dachbereich und die halbe Höhe der Hecktür umfaßt. Somit wird die Ladefläche ähnlich wie bei einem Pickup-Fahrzeug für das Beladen von hinten und oben freigelegt.

Besonders vorteilhaft ist es, wenn der Deckel des vorderen Dachsystems in vollständig ausgestelltem Zustand mit seiner Hinterkante höher liegt als die geöffneten Deckelteile des hinteren Dachsystems. Dadurch wird der Fahrtwind vollständig über das Paket des geöffneten Lamellendachs hinweg geleitet. Dies ist jedoch nur dann sinnvoll, wenn die Lamellen mit ihrer Vorderkante schräg nach vorne oben geneigt sind. Bei einer herkömmlichen Neigung der Lamellen mit ihrer Hinterkante nach hinten oben wirkt die vorderste ausgestellte Lamelle selbst wie ein Windabweiser für den dahinter liegenden Teil der Dachöffnung.

Vorteilhaft ist zwischen beiden Dachsystemen ein schmaler Querspriegel oder ein schmaler Bereich des festen Fahrzeugdachs angeordnet. Durch eine solche Verbindung zwischen den Seitenholmen wird die Stabilität des Fahrzeugs erhöht.

Besonders vorteilhaft ist eine Ausführungsform, bei der das vordere Dachsystem ein außengeführtes Schiebedach ist, dessen Deckel nahe seiner Hinterkante von Stützhebeln abgestützt wird, deren untere Enden an Gleitelementen gelagert sind, die an seitlich außerhalb von Führungen für die lamellenartigen Deckelteile des hinteren Dachsystems liegenden Führungen verschiebbar sind. Die Verwendung eines außengeführtes Schiebedachs ermöglicht das komfortable Freilegen einer großen vorderen Dachöffnung, solange das hintere Lamellendach nicht einen bestimmten Öffnungsgrad erreicht hat. Das Fahrzeug hat somit für den Benutzer einen Doppelnutzen: bei geöffnetem vorderen Dachsystem bietet es die Vorteile eines großen Schiebedachs, bei geöffnetem hinteren Dachsystem bietet es einen großzügigen Zugang zum Laderaum, wobei gleichzeitig bei ausgestelltem vorderen Deckel auch dort noch eine Entlüftungsmöglichkeit gegeben ist.

In einer alternativen Ausgestaltung ist der vordere Deckel als Deckel eines Spoilerdachs ausgebildet, der mit seiner Hinterkante in eine Lüfterstellung anhebbar und in dieser gekippten Position teilweise über das dahinter angeordnete Dach verschiebbar ist. In diesem Falle kann vorteilhaft eine einzige durchgehende Führungsschiene verwendet werden, in der sowohl der Deckel des Spoilerdachs als auch die hinten liegenden Lamellen geführt sind.

Gemäß einer Variante kann vorgesehen sein, daß der Deckel des vorderen Dachsystems zwangsweise in seine Ausstellposition verfahren wird, sobald das Steuergerät ein Signal zur Öffnung des hinteren Dachsystems zumindestens für einen bestimmten Teilöffnungsgrad erhält.

Schließlich ist es vorteilhaft, wenn dem vordere Dachsystem eine Windabweislamelle vorgelagert ist, die in eine Ausstellposition verfahren wird, sobald der Deckel des vorderen Dachsystems zumindestens einen bestimmten Teilöffnungsgrad erreicht hat. Durch diese Ausgestaltung wird auch die vordere Dachöffnung bei zumindestens teilweise nach hinten verfahrenem Deckel wirksam vor Zugluft und Windgeräuschen geschützt.

Nachfolgend ist ein Ausführungsbeispiel der Erfindung anhand der Zeichnung beschrieben. Es zeigt:
- Fig. 1: eine schematische perspektivische Ansicht eines Fahrzeugdachs mit einem vorderen außen geführten Schiebedach, einer davor angeordneten Windabweislamelle und einem dahinter liegenden Lamellendach,
- Fig. 2: einen Querschnitt durch die Führungen im Bereich des linken Seitenholms,
- Fig. 3: einen schematischen Längsschnitt durch das Fahrzeugdach bei geöffnetem Lamellendach und ausgestelltem vorderen Deckel,
- Fig. 4: einen schematischen Längsschnitt durch das Fahrzeugdach bei teilweise geöffnetem vorderen Deckel, ausgestellter Windabweislamelle und geschlossenen Lamellendach, und
- Fig.5: einen schematischen Längsschnitt durch eine alternative Ausführungsform eines Fahrzeugdachs mit ausgestellter Windabweislamelle, mit einem vorderen teilweise geöffneten Spoilerdach-Deckel und mit geöffnetem Lamellendach, wobei die Lamellen mit ihrer Hinterkante nach hinten oben geneigt sind.

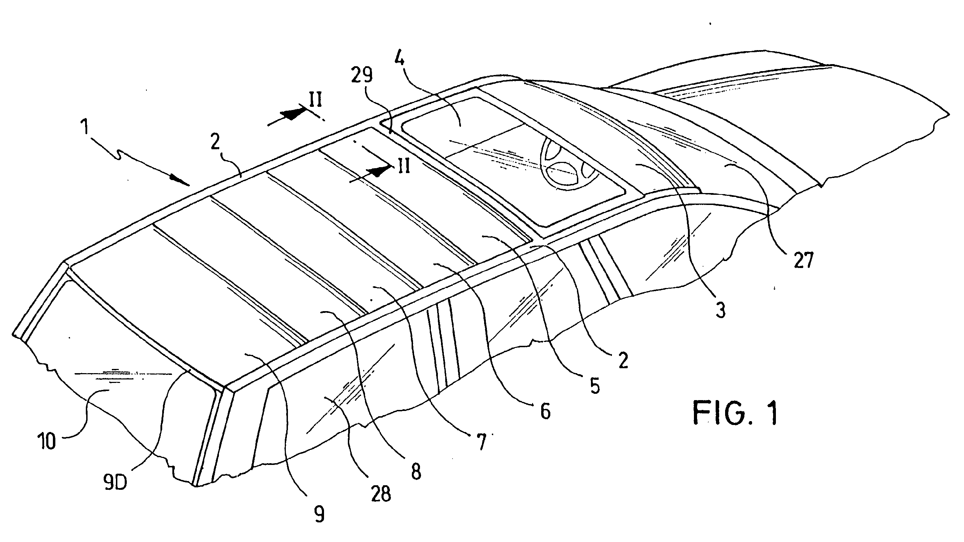

Bei dem in Fig. 1 dargestellten Fahrzeugdach 1 schließt sich an eine Frontscheibe 27 nach hinten eine Windabweislamelle 3, ein Deckel 4 eines außengeführten Schiebedachs und ein aus mehreren Deckelteilen 5, 6, 7, 8 und 9 bestehendes Lamellendach an. Das außengeführte Schiebedach und das Lamellendach werden seitlich von Seitenholmen 2 begrenzt.

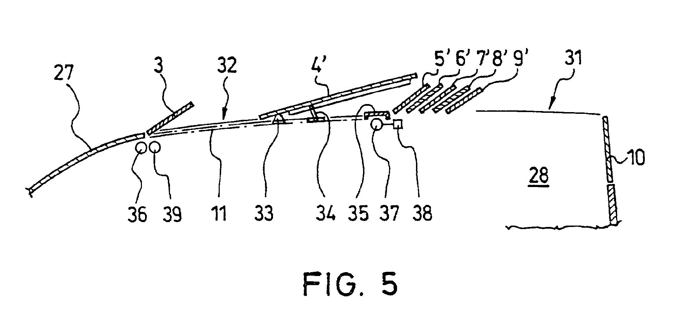

Die Hinterkante 4D des Deckels 4 grenzt in geschlossenem Zustand entweder nahtlos an die Vorderkante des ersten lamellenartigen Deckelteils 5 an oder zwischen beiden ist ein als Querspriegel ausgebildeter schmaler Bereich 29 des festen Fahrzeugdachs 1 vorhanden. Wenn der Deckel 4 und das Deckelteil 5 nahtlos aneinander angrenzen, können beide auch von einem Querspriegel 35 (siehe Fig. 5) im Bereich ihrer Stoßstelle unterfangen sein, wodurch die Stabilität des Fahrzeugdachs erhöht wird.

Die Hinterkante 9D des hinteren Deckelteils 9 grenzt unmittelbar an die Oberkante einer Heckscheibe 10 an, die in einer Hecktür oder Heckklappe nach unten versenkbar gelagert ist.

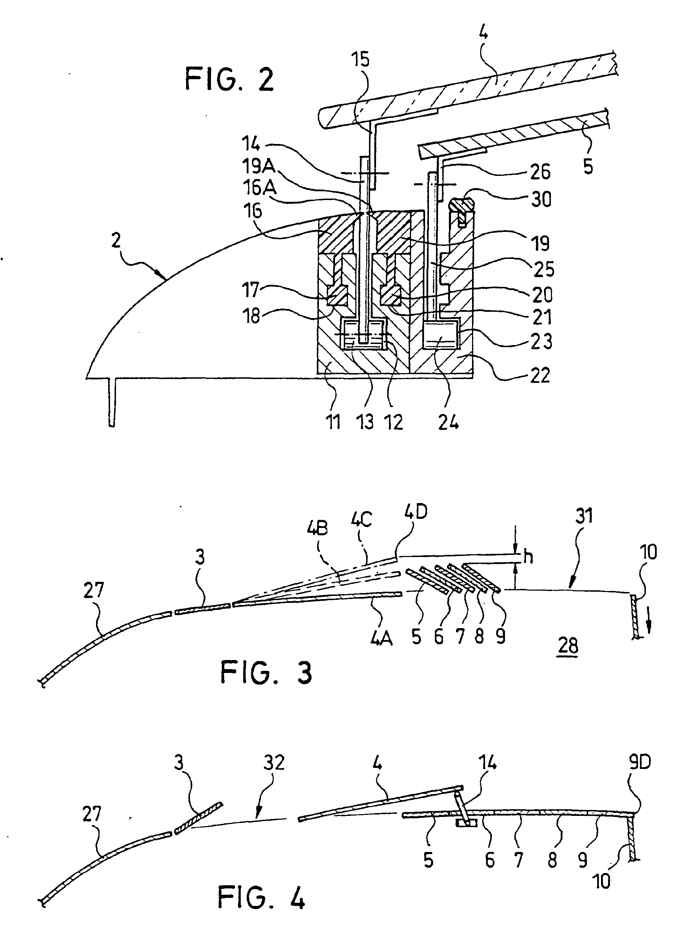

Wie im Fig. 2 dargestellt, ist der Deckel 4 des außengeführten Schiebedachs im Bereich seiner Hinterkante 4D in ausgestellten Zustand durch einen Stützhebel 14 auf jeder Seite abgestützt. Das untere Ende des Stützhebels 14 ist schwenkbar an einem Gleitelement 13 gelagert, welches längsverschiebbar in einem Führungskanal 12 geführt ist. Der Führungskanal 12 ist in einer Führungsschiene 11 ausgebildet, die am Seitenholm 2 gelagert ist. Die Anbindung des Stützhebels 14 an den Deckel 4 erfolgt mittels eines Tragwinkels 15. Der Führungskanal 12 ist für das Austreten des Stützhebels 14 nach oben geöffnet und wird bei geschlossenen Deckel 4 von zwei Dichtungselementen 16 bzw. 19 abgedeckt.

Das Dichtelement 16 ist mit einem Steckfuß 17 in einer Aufnahmenut 18 in der Führungsschiene 11 befestigt. Am oberen inneren Rand des Dichtungselements 16 ist eine Dichtlippe 16A vorgesehen, die mit einer Dichtlippe 19A am Dichtelement 19 derart zusammenwirkt, daß die beiden Dichtlippen 16A bzw. 19A bei geschlossenem Deckel 4 und abgesenktem Stützhebel 14 dicht aneinander anliegen und den Führungskanal 12 vollständig nach oben abdecken. Beim Ausstellen der Hinterkante 4D des Deckels 4 übernimmt der Stützhebel 14 seine Stützfunktion und tritt dabei an den Dichtlippen 16A bzw. 19A vorbei nach oben über das feste Fahrzeugdach 1 aus. Die Dichtlippen weichen dabei zur Seite und schmiegen sich an den Stützhebel 14 an.

Vom Seitenholm 2 aus nach innen gesehen schließt sich an die Führungsschiene 11 eine Führungsschiene 22 an, in deren Führungskanal 23 ein Gleitelementen 24 längsverschiebbar gelagert ist, an welchem eine Führungskulisse 25 zur Betätigung des Deckelteils 5 angeordnet ist. Die Anbindung des Deckelteils 5 an die Deckelkulisse 25 erfolgt mittels eines Tragwinkels 26. Die Abdichtung des Deckelteils 5 gegenüber der Dachöffnung erfolgt mittels eines Dichtelements 30, das oben am innenliegenden vertikalen Steg der Führungsschiene 22 befestigt ist.

In Fig. 3 ist das Lamellendach mit den Deckelteilen 5, 6, 7, 8, 9 vollständig geöffnet, wobei die Deckelteile von hinten nach vorne gefahren sind. Dadurch wird die hintere Dachöffnung 31 vollständig freigelegt. Bei gleichzeitiger Absenkung der Heckscheibe 10 in die Hecktür oder Heckklappe wird eine Beladungsöffnung freigelegt, die nicht nur den hinteren Dachbereich, sondern auch den oberen Teil der hinteren Fahrzeugabdeckung (Hecktür) umfaßt.

Das als Paket nach vorne zusammengeschobene Lamellendach wird durch den in mehreren Zwischenstadien 4B bis zur vollständigen Ausstellungsposition 4C anhebbaren Deckel 4 wirksam vor dem angreifenden Fahrtwind geschützt. Die Position der Hinterkante 4D des Deckels 4 liegt in vollständig ausgestellten Zustand um eine Höhendifferenz h höher als die Oberkante der lamellenartigen Deckelteile. Dadurch wird der Fahrtwind vollständig über das Paket des Lamellendachs hinweggeleitet. Auch die hintere Dachöffnung 31 ist dadurch wirksam vor Zugluft geschützt.

Bei dem im Fig. 4 dargestellten Öffnungszustand ist das Lamellendach vollständig geschlossen. Dagegen ist der Deckel 4 des außengeführten Schiebedachs mit seiner Hinterkante ausgestellt, wobei die Funktion der Stützhebel 14 mit angedeutet ist. Der Deckel 4 läßt sich zur Freigabe der vorderen Dachöffnung 32 vollständig über das Lamellendach nach hinten verfahren. Dies ist dadurch möglich, weil die Führungsschienen 11 für den Deckel 4 bzw. den Stützhebel 14 seitlich außerhalb der Führungsschienen 22 des Lamellendachs angeordnet sind.

Um die vordere Dachöffnung 32 ebenfalls vor Zugluft zu schützen, ist bei geöffnetem Deckel 4 die Windabweislamelle 3 ausgestellt.

Bei der in Fig. 5 gezeigten Ausführungsform grenzt an die Frontscheibe 27 eine ausstellbare Windabweislamelle 3 an. Der nach hinten daran anschließende Deckel 4' ist abweichend von den vorstehend beschriebenen Ausführungsbeispielen als Deckel eines Spoilerdachs ausgebildet. Der Deckel 4' ist nahe seiner Vorderkante an einem Gleitelement 33 schwenkbar angelenkt und mittels eines dahinter angelenkten Ausstellhebels 34 mit seiner Hinterkante ausstellbar und in dieser ausgeschwenkten Position zur teilweisen Freigabe einer vorderen Dachöffnung 32 nach hinten verfahrbar. Dabei ist die Verschiebung des Deckels 4' nach hinten dann zusätzlich begrenzt, wenn das vorderste lamellenartige Deckelteil 5' eines dahinter angeordneten, weitere lamellenartige Deckelteile 6', 7', 8' und 9' umfassenden Lamellendachs in eine Ausstellposition geschwenkt ist. Das hintere Lamellendach-System mit den Deckelteilen 5',6', 7', 8' und 9' öffnet ebenfalls von hinten nach vorn, wobei die Hinterkanten der Deckelteile abweichend von Fig. 3 nach hinten oben geneigt sind. Dadurch, daß die Gleitelemente 33 und der untere Abstützpunkt des Ausstellhebels 34 in den gleichen Führungsschienen verfahren werden, wie die Gleitelemente der Deckelteile 5',6', 7', 8' und 9', sind nicht, wie in Fig. 2 gezeigt, zwei seitlich nebeneinander angeordnete Führungssysteme nötig, sondern nur eines. Die Deckelteile 5',6', 7', 8' und 9' können dadurch auch weiter außen geführt werden und die gleiche Breite aufweisen, wie der vordere Deckel 4'. Dadurch weisen auch die vordere Dachöffnung 32 und die hintere Dachöffnung 31 die selbe Breite auf, was sich vorteilhaft auf die Optik des Fahrzeugs, sowohl bei geschlossenem als auch bei geöffnetem Dach auswirkt.

In Fig. 5 ist ferner ein elektrischer Antrieb 36 für den vorderen Deckel 4 bzw. 4' dargestellt, der über nicht dargestellte zug- und drucksteif geführte Antriebskabel mit dem Gleitelement 33 bzw. mit dem unteren Anlenkpunkt des Ausstellhebels 34 in Antriebsverbindung steht. Im Bereich eines Querspriegels 35 ist ein weiterer Antrieb 37 angeordnet, der in gleicher Weise mit den Deckelteilen 5', 6', 7', 8', 9' in Antriebsverbindung steht. Auch wenn die Antriebe nur in Fig. 5 angedeutet sind, ist für den Fachmann klar, daß derartige Antriebe 36 bzw. 37 auch für den vorderen Deckel 4 und die Deckelteile 5, 6, 7, 8 und 9 des Ausführungsbeispiels gemäß den Fig. 1 bis 4 geeignet sind. Die Antriebe 36 bzw. 37 können auch beide im Bereich des Querspriegels 35 bzw. des Bereichs 29 des festen Fahrzeugdachs oder vorn im Bereich der Windabweislamelle 3 angeordnet sein oder ein Teil oder beide Antriebe sind hinten im Bereich des Laderaums 28 angeordnet. Die Verknüpfung der Antriebe 36, 37 sowie gegebenfalls eines weiteren Antriebs 39 zum Betätigen der Windabweislamelle 3 erfolgt vorteilhaft durch ein gemeinsames Steuergerät 38, das über Positionsmelder die jeweilige Position der Deckel 4, 4' bzw. der Deckelteile 5, 6, 7, 8, 9 oder 5', 6', 7', 8', 9' und der Windabweislamelle 3 erkennt und bevorzugte Programme gespeichert hat, wodurch die Position der anderen Elemente an bestimmte Positionen angepaßt wird und das Gesamtsystem für eine optimale Belüftung bei geringstmöglicher Geräusch- oder Zugluftbelästigung sorgt. Das Steuergerät 38 hat also neben der Funktion, Kollisionen der bewegbaren Dachelemente (Windabweislamelle 3, Deckel 4, 4' und Deckelteile 5, 6, 7, 8, 9 oder 5', 6', 7', 8', 9') zu verhindern auch die Aufgabe, diese in bevorzugte Positionen zueinander zu verfahren.

Durch das dargestellte Fahrzeugdach werden die Vorzüge eines bekannten ausstellbaren Schiebedachs mit denen eines Lamellendach für den besonderen Zweck der Freilegung eines hinteren Laderaums hervorragend kombiniert.

### Bezugszeichenliste

- 1: Fahrzeugdach
- 2: Seitenholm
- 3: Windabweislamelle
- 4,4': Deckel
- 4A-C: Deckelpositionen
- 4D: Hinterkante
- 5, 5': Deckelteil
- 6, 6': Deckelteil
- 7, 7': Deckelteil
- 8, 8': Deckelteil
- 9, 9': Deckelteil
- 10: Heckscheibe
- 11: Führungsschiene
- 12: Führungskanal
- 13: Gleitelement
- 14: Stützhebel
- 15: Tragwinkel
- 16: Dichtungselement
- 16A: Dichtlippe
- 17: Steckfuß
- 18: Aufnahmenut
- 19: Dichtungselement
- 19A: Dichtlippe
- 20: Steckfuß
- 21: Aufnahmenut
- 22: Führungsschiene
- 23: Führungskanal
- 24: Gleitelement
- 25: Führungskulisse
- 26: Tragwinkel
- 27: Frontscheibe
- 28: Laderaum
- 29: Bereich (von 1)
- 30: Dichtelement
- 31: (hintere) Dachöffnung
- 32: (vordere) Dachöffnung
- 33: Gleitelement (von 4')
- 34: Ausstellhebel (von 4')
- 35: Querspriegel
- 36: Antrieb (von 4 bzw. 4')
- 37: Antrieb (von 5, 6, 7, 8, 9, bzw. 5', 6', 7', 8', 9')
- 38: Steuergerät

## Patentansprüche

1. Fahrzeug mit einem öffnungsfähigen Fahrzeugdach, mit wenigstens zwei hintereinander angeordneten, separat öffnungsfähigen Dachsystemen, von denen ein vorderes Dachsystem wenigstens einen mit seiner Hinterkante (4D) über das feste Fahrzeugdach (1) ausstellbaren Deckel (4, 4') umfaßt, **dadurch gekennzeichnet, dass** ein hinteres Dachsystem von einem aus mehreren einzelnen lamellenartigen Deckelteilen (5, 6, 7, 8, 9 bzw. 5',6', 7', 8' und 9') bestehenden Lamellendach gebildet wird, das mit seinem hintersten Deckelteil (9 bzw. 9') über dem hinteren Bereich eines Laderaums (28) des Fahrzeugs angeordnet ist und das von hinten nach vorne geöffnet wird und dass das vordere und das hintere Dachsystem (4, 4'; 5, 6, 7, 8, 9 bzw. 5', 6', 7', 8', 9') über getrennte elektrische Antriebe (36, 37) antreibbar sind, die von einem gemeinsamen Steuergerät (38) derart ansteuerbar sind, dass der Deckel (4, 4') des vorderen Dachsystems nur begrenzt in Längsrichtung verschiebbar ist, sobald das hintere Dachsystem (5, 6, 7, 8, 9 bzw. 5',6', 7', 8', 9') zumindestens einen bestimmten Teilöffnungsgrad erreicht hat.

2. Fahrzeug nach Anspruch 1, **dadurch gekennzeichnet, dass** das hintere Deckelteil (9 bzw. 9') mit seiner Hinterkante (9D) unmittelbar an einer Heckklappe, Hecktür oder Heckscheibe (10) des Fahrzeugs angrenzt.

3. Fahrzeug nach Anspruch 1 oder 2, **dadurch gekennzeichnet, dass** der Deckel (4 bzw. 4') des vorderen Dachsystems in vollständig ausgestelltem Zustand (4C) mit seiner Hinterkante (4D) höher liegt als die geöffneten Deckelteile (5, 6, 7, 8, 9 bzw. 5',6',7', 8' und 9') des hinteren Dachsystems.

4. Fahrzeug nach einem der vorhergehenden Ansprüche, **dadurch gekennzeichnet, dass** zwischen beiden Dachsystemen (4, 4' bzw. 5, 6, 7, 8, 9; 5',6', 7', 8' und 9) ein schmaler Querspriegel (35) oder ein schmaler Bereich (29) des festen Fahrzeugdachs (1) angeordnet ist.

5. Fahrzeug nach einem der vorhergehenden Ansprüche, **dadurch gekennzeichnet, dass** das vordere Dachsystem ein außengeführtes Schiebedach ist, dessen Deckel (4) nahe seiner Hinterkante (4D) von Stützhebeln (14) abgestützt wird, deren untere Enden an Gleitelementen (13) gelagert sind, die an seitlich außerhalb von Führungen (22) für die lamellenartigen Deckelteile (5, 6, 7, 8, 9) des hinteren Dachsystems liegenden Führungen (11) verschiebbar sind.

6. Fahrzeug nach einem der Ansprüche 1 bis 4, **dadurch gekennzeichnet, dass** das vordere Dachsystem ein Spoilerdach ist, dessen Deckel (4') nahe seiner Vorderkante schwenkbar an einem Gleitelement (33) angelenkt ist und dahinter von Ausstellhebeln (34) abgestützt wird, deren untere Enden an Gleitelementen gelagert sind, die an seitlich mit den Führungen für die lamellenartigen Deckelteile (5', 6', 7', 8', 9') des hinteren Dachsystems fluchtenden Führungen (11) verschiebbar sind.

7. Fahrzeug nach einem der vorhergehenden Ansprüche, **dadurch gekennzeichnet, dass** der Deckel (4, 4') des vorderen Dachsystems zwangsweise in seine Ausstellposition (4C) verfahren wird, sobald das Steuergerät (38) ein Signal zur Öffnung des hinteren Dachsystems (5, 6, 7, 8, 9 bzw. 5', 6', 7', 8', 9') zumindestens für einen bestimmten Teilöffnungsgrad erhält.

8. Fahrzeug nach einem der vorhergehenden Ansprüche, **dadurch gekennzeichnet, dass** dem vorderen Dachsystem (4, 4') eine Windabweislamelle (3) vorgelagert ist, die in eine Ausstellposition verfahren wird, sobald der Deckel (4, 4') des vorderen Dachsystems zumindestens einen bestimmten Teilöffnungsgrad erreicht hat.

## Claims

1. Vehicle having an openable vehicle roof, having at least two separately openable roof systems arranged one behind the other, of which a front roof system comprises at least one cover (4, 4') which is raisable at its rear edge (4D) above the fixed vehicle roof (1), **characterised in that** a rear roof system is formed by a louvred roof which is composed of a plurality of individual louvre-like cover parts (5, 6, 7, 8, 9 and 5', 6', 7', 8' and 9', respectively), has its rearmost cover part (9 and 9', respectively) arranged over the rear area of a loading space (28) of the vehicle and is opened from the rear to the front, and **in that** the front and the rear roof system (4, 4'; 5, 6, 7, 8, 9 and 5', 6', 7', 8', 9', respectively) can be driven via separate electric drives (36, 37), which can be controlled by a common control device (38) in such a way that the cover (4, 4') of the front roof system is displaceable only to a limited degree in the longitudinal direction as soon as the rear roof system (5, 6, 7, 8, 9 and 5', 6', 7', 8', 9', respectively) has reached at least a certain degree of partial opening.

2. Vehicle according to Claim 1, **characterised in that** the rear edge (9D) of the rear cover part (9 and 9', respectively) directly adjoins a rear hatch, rear door or rear window (10) of the vehicle.

3. Vehicle according to Claim 1 or 2, **characterised in that** the rear edge (4D) of the cover (4 and 4', respectively) of the front roof system is, in the fully raised state (4C), higher than the opened cover parts (5, 6, 7, 8, 9 and 5', 6', 7', 8' and 9', respectively) of the rear roof system.

4. Vehicle according to one of the preceding claims, **characterised in that** a narrow cross-arch (35) or a narrow area (29) of the fixed vehicle roof (1) is arranged between the two roof systems (4, 4' and 5, 6, 7, 8, 9; 5', 6', 7', 8' and 9', respectively).

5. Vehicle according to one of the preceding claims, **characterised in that** the front roof system is an externally guided sliding roof with a cover (4) which is supported near its rear edge (4D) by support levers (14), the bottom ends of which are mounted on sliding elements (1a) which are displaceable on guides (11) which lie laterally outside guides (22) for the louvre-like cover parts (5, 6, 7, 8, 9) of the rear roof system.

6. Vehicle according to one of Claims 1 to 4, **characterised in that** the front roof system is a spoiler roof with a cover (4') which is pivotally coupled near its front edge to a sliding element (33) and is supported therebehind by raising levers (34), the bottom ends of which are mounted on sliding elements which are displaceable on guides (11) which are laterally flush with the guides for the louvre-like cover parts (5', 6', 7', 8', 9') of the rear roof system.

7. Vehicle according to one of the preceding claims, **characterised in that** the cover (4, 4') of the front roof system is necessarily moved into its raised position (4C) as soon as the control device (38) receives a signal for opening the rear roof system (5, 6, 7, 8, 9 and 5', 6', 7', 8', 9', respectively) at least for a certain degree of partial opening.

8. Vehicle according to one of the preceding claims, **characterised in that** a wind deflector louvre (3) is located in front of the front roof system (4, 4'), said wind deflector louvre being moved into a raised position as soon as the cover (4, 4') of the front roof system has reached at least a certain degree of partial opening.

## Revendications

1. Véhicule avec un toit ouvrant de véhicule, avec au moins deux systèmes de toit pouvant être séparément ouverts qui sont disposés l'un à la suite de l'autre, parmi lesquels un système de toit avant comprend au moins un panneau (4, 4') pouvant être relevé par son bord arrière (4D) au-dessus du toit fixe (1) du véhicule, **caractérisé en ce qu'**un système de toit arrière est formé par un toit à lamelles constitué de plusieurs parties individuelles de panneau du genre lamelles (5, 6, 7, 8, 9 ou 5', 6', 7', 8', 9'), dont la partie de panneau la plus arrière (9 ou 9') est disposée au-dessus de la région arrière d'un espace de chargement (28) du véhicule et qui est ouvert de l'arrière vers l'avant, et **en ce que** le système de toit avant et le système de toit arrière (4, 4' ; 5, 6, 7, 8, 9 ou 5', 6', 7', 8', 9') peuvent être entraînés au moyen d'entraînements électriques séparés (36, 37) qui peuvent être asservis par un appareil de commande commun (38) de telle sorte que le panneau (4, 4') du système de toit avant ne peut être coulissé que dans une mesure limitée en direction longitudinale dès que le système de toit arrière (5, 6, 7, 8, 9 ou 5', 6', 7', 8', 9') a atteint au moins un degré donné d'ouverture partielle.

2. Véhicule selon la revendication 1, **caractérisé en ce que** le bord arrière (9D) de la partie de panneau arrière (9 ou 9') est directement limitrophe d'un hayon arrière, d'une porte arrière ou d'une lunette arrière (10) du véhicule.

3. Véhicule selon la revendication 1 ou 2, **caractérisé en ce que** le bord arrière (4D) du panneau (4, 4') du système de toit avant se situe, dans l'état totalement relevé (4C), plus haut que les parties de panneau ouvertes (5, 6, 7, 8, 9 ou 5', 6', 7', 8', 9') du système de toit arrière.

4. Véhicule selon l'une des revendications précédentes, **caractérisé en ce qu'**un étroit arceau transversal (35) ou une région étroite (29) du toit fixe (1) du véhicule est disposé entre les deux systèmes de toit (4, 4' ; 5, 6, 7, 8, 9 ou 5', 6', 7', 8', 9').

5. Véhicule selon l'une des revendications précédentes, **caractérisé en ce que** le système de toit avant est un toit coulissant à guidage extérieur, dont le panneau (4) est soutenu à proximité de son bord arrière (4D) par des leviers de soutien (14) dont les extrémités inférieures sont montées sur des éléments coulissants (13) qui peuvent coulisser sur des guides (11) situés latéralement à l'extérieur de guides (22) pour les parties de panneau du genre lamelles (5, 6, 7, 8, 9) du système de toit arrière.

6. Véhicule selon l'une des revendications 1 à 4, **caractérisé en ce que** le système de toit avant est un déflecteur de toit dont le panneau (4') est articulé à proximité de son bord avant à pivotement sur un élément coulissant (33) et est soutenu plus en arrière par des leviers de relevage (34) dont les extrémités intérieures sont montées sur des éléments coulissants qui peuvent coulisser sur des guides (11) alignés latéralement avec les guides pour les parties de panneau du genre lamelles (5', 6', 7', 8', 9') du système de toit arrière.

7. Véhicule selon l'une des revendications précédentes, **caractérisé en ce que** le panneau (4, 4') du système de toit avant est déplacé de manière forcée dans sa position relevée (4C) dès que l'appareil de commande (38) reçoit un signal pour ouvrir le système de toit arrière (5, 6, 7, 8, 9 ou 5', 6', 7', 8', 9') au moins d'un degré donné d'ouverture partielle.

8. Véhicule selon l'une des revendications précédentes, **caractérisé en ce qu'**une lamelle déflectrice (3) est montée en avant du système de toit avant (4, 4'), laquelle est déplacée dans une position relevée dès que le panneau (4, 4') du système de toit avant a atteint au moins un degré donné d'ouverture partielle.
